# FASCICULE DE BREVET EUROPEEN

(11) **EP 3 604 853 B1**
(45) Date de publication et mention de la délivrance du brevet: **26.03.2025**
(21) Numéro de dépôt: 19189365.0
(22) Date de dépôt: 31.07.2019
(51) Int. Cl.: F16F 15/123

(54) **AGENCEMENT DE RESSORTS ET DISPOSITIF DE TRANSMISSION DE COUPLE**
FEDERNANORDNUNG UND DREHMOMENTÜBERTRAGUNGSVORRICHTUNG
ARRANGEMENT OF SPRINGS AND TORQUE-TRANSMISSION DEVICE

(30) Priorité: 03.08.2018 FR 1857283
(43) Date de publication de la demande: 05.02.2020
(73) Titulaire: VALEO EMBRAYAGES, 80009 Amiens (FR)
(72) Inventeur: BOUCHE, Gabriel, 95892 CERGY PONTOISE (FR); DAST, Pascal, 95892 CERGY PONTOISE (FR)
(74) Mandataire: Valeo Powertrain Systems

(56) Documents cités:
- EP-A1- 3 026 293
- WO-A1-2006/035173
- DE-A1- 102011 109 273
- FR-A1- 2 732 426
- US-A1- 2017 276 221

## Description

L'invention concerne le domaine des agencements de ressorts, des amortisseurs de torsion et des dispositifs de transmission de couple pour les groupes motopropulseurs de véhicules à moteur.

Les véhicules à moteur peuvent être munis d'un dispositif d'amortissement de torsion sur leur chaine de transmission. Un tel dispositif d'amortissement peut être inclus par exemple dans un disque d'embrayage ou un limiteur de couple disposé entre le moteur et la boite de vitesse d'un véhicule. Un tel dispositif d'amortissement de torsion permet le filtrage des acyclismes du moteur et autres oscillations de torsion. Ces dispositifs d'amortissement de torsion permettent, au cours de la transmission du couple, un mouvement de rotation relative d'un premier élément tournant et d'un deuxième élément tournant, grâce à un ou plusieurs ressorts intervenant circonférentiellement entre eux. Ces ressorts peuvent être regroupés les uns dans les autres. Ces groupes de ressorts peuvent être désigné par l'expression agencement de ressorts.

Il existe des agencements de ressorts comportant trois ressorts hélicoïdaux montés les uns dans les autres et dans lesquels les sièges sont dépourvus de moyens de centrage du ressort intermédiaire. Le ressort intermédiaire peut alors se déplacer et frotter contre le ressort interne et le ressort externe, ce qui nuit à la qualité d'amortissement de l'amortisseur.
Il existe aussi la demande de brevet DE102015222660 qui décrit un agencement de ressorts comportant trois ressorts hélicoïdaux montés les uns dans les autres avec des sièges disposés aux extrémités des ressorts. La forme de ces sièges est telle qu'il existe une perte de place importante entre le ressort interne et le ressort intermédiaire. Dans un agencement de ressort, l'espace non occupé par les ressorts est un espace « perdu » du point de vue de la filtration. Le document EP3026293 divulgue aussi un agencement de ressorts comportant trois ressorts hélicoïdaux montés les uns dans les autres.

L'invention a pour but d'améliorer les agencements de ressorts de l'art antérieur.

À cet effet, l'invention vise un agencement de ressorts pour un dispositif de transmission de couple de véhicule à moteur comprenant :
- un ressort hélicoïdal intérieur,
- un ressort hélicoïdal intermédiaire, à l'intérieur duquel est logé le ressort hélicoïdal intérieur,
- un ressort hélicoïdal extérieur, à l'intérieur duquel sont logés le ressort hélicoïdal intermédiaire et le ressort hélicoïdal intérieur,
- un premier siège comprenant une surface d'appui interne sur laquelle peut s'appuyer une première extrémité du ressort hélicoïdal intérieur et une surface d'appui externe sur laquelle peut s'appuyer une première extrémité du ressort hélicoïdal extérieur, le premier siège comportant en outre un centreur faisant saillie par rapport à la surface d'appui interne et par rapport à la surface d'appui externe ; le centreur du premier siège présentant d'une part un contour externe à l'extérieur duquel est agencé la première extrémité du ressort hélicoïdal extérieur et d'autre part un contour interne à l'intérieur duquel est agencé la première extrémité du ressort hélicoïdal intérieur, le centreur du premier siège présentant en outre une face d'appui intermédiaire sur laquelle peut s'appuyer une première extrémité du ressort hélicoïdal intermédiaire,

la première extrémité du ressort hélicoïdal intermédiaire comportant un chanfrein et le centreur du premier siège comportant un rebord de centrage agencé pour coopérer avec le chanfrein du ressort hélicoïdal intermédiaire pour centrer le ressort hélicoïdal intermédiaire,
dans lequel : pour une distance L1 séparant le ressort hélicoïdal extérieur du ressort hélicoïdal intérieur, et pour un diamètre de spire D du ressort hélicoïdal intermédiaire, le diamètre de spire et le centreur sont agencés de sorte que 0,75< D/L1 < 0,97, et pour une distance L2 séparant le contour interne et le contour externe du centreur du premier siège, la distance L2 est telle que 0,8<D/L2<1.

Ici, on appelle siège un organe d'appui intercalé entre les ressorts et les éléments sur lesquels ils s'appuient. Le terme siège inclut aussi les organes d'appuis appelés parfois « coupelles ».

Ainsi, pour un encombrement donné de l'agencement de ressorts, il est possible de faire baisser la raideur de l'agencement de ressorts par rapport à l'art antérieur.

Le dispositif d'amortissement peut en outre comporter les caractéristiques additionnelles suivantes, seules ou en combinaison :
- Le rebord fait saillie par rapport à la face d'appui intermédiaire du ressort hélicoïdal intermédiaire.
- Le diamètre de spire et le centreur sont agencés de sorte que 0,75<D/L1<0,9.
- Le diamètre de spire et le centreur sont agencés de sorte que 0,8<D/L1<0,97, de préférence 0,8<D/L1<0,90 par exemple D/L1=0,85.
- Le ressort hélicoïdal intérieur, le ressort hélicoïdal intermédiaire et le ressort hélicoïdal extérieur sont sensiblement coaxiaux.
- Le ressort hélicoïdal intermédiaire s'étend le long d'un axe (Y)
- Les spires du ressort hélicoïdal intermédiaire sont enroulées autour de l'axe (Y).
- Le ratio D/L1 peut être pris dans tout plan passant par l'axe (Y) et par le centreur.
- Le centreur s'étend circonférentiellement tout autour de l'axe (Y).
- Selon une variante, le centreur comprend une pluralité de plots espacés les uns des autres, une partie au moins des plots ayant un bord interne tourné vers l'axe du ressort hélicoïdal intermédiaire et formant le contour interne du centreur, et une partie au moins des plots ayant un bord externe tourné du côté opposé à l'axe du ressort hélicoïdal intermédiaire et formant le contour externe du centreur.
- Le contour interne du centreur est discontinu.
- Le contour externe du centreur est discontinu.
- Chaque plot comporte un bord interne tourné vers l'axe (Y) et formant une partie du contour interne du centreur.
- Chaque plot comporte un bord externe tourné du côté opposé à l'axe (Y) et formant une partie du contour externe du centreur.
- Le rebord de centrage comporte une paroi inclinée plaquée contre le chanfrein du ressort hélicoïdal intermédiaire, la paroi inclinée du rebord étant agencée sur une extrémité du centreur axialement opposée aux surfaces d'appui interne et externe du premier siège.
- La paroi inclinée du centreur relie la face d'appui intermédiaire du centreur au contour externe du centreur.
- La paroi inclinée coopère ainsi avec un chanfrein ménagé sur un bord radialement externe de la première extrémité du ressort hélicoïdal intermédiaire.
- La paroi inclinée du centreur relie la face d'appui intermédiaire du centreur au contour interne du centreur.
- La paroi inclinée coopère ainsi avec un chanfrein ménagé sur un bord radialement interne de la première extrémité du ressort hélicoïdal intermédiaire.
- Dans un plan comprenant l'axe (Y) et passant par le rebord, le rebord présente une section de forme générale triangulaire, l'un des côtés de la section de forme générale triangulaire formant la paroi inclinée et un autre des côtés de la section de forme générale triangulaire formant une partie du contour externe ou interne du centreur.
- L'agencement de ressorts comprend un deuxième siège comprenant une surface d'appui interne sur laquelle peut s'appuyer une deuxième extrémité du ressort hélicoïdal intérieur et une surface d'appui externe sur laquelle peut s'appuyer une deuxième extrémité du ressort hélicoïdal extérieur, le deuxième siège comportant en outre un centreur faisant saillie par rapport à la surface d'appui interne et par rapport à la surface d'appui externe du deuxième siège, le centreur du deuxième siège présentant d'une part un contour externe à l'extérieur duquel est agencé la deuxième extrémité du ressort hélicoïdal extérieur et d'autre part un contour interne à l'intérieur duquel est agencé la deuxième extrémité du ressort hélicoïdal intérieur, le centreur du deuxième siège présentant en outre une face d'appui intermédiaire sur laquelle peut s'appuyer une deuxième extrémité du ressort hélicoïdal intermédiaire.
- La deuxième extrémité du ressort hélicoïdal intermédiaire comporte un chanfrein et le centreur du deuxième siège comporte un rebord de centrage coopérant avec le chanfrein du ressort hélicoïdal intermédiaire pour centrer le ressort hélicoïdal intermédiaire,
- Pour une distance L1 séparant le ressort hélicoïdal extérieur du ressort hélicoïdal intérieur, et pour un diamètre de spire du ressort hélicoïdal intermédiaire, le diamètre de spire et le centreur du deuxième siège sont agencés de sorte que 0,75< D/L1 < 0,97, de préférence 0,75<D/L1<0,9, notamment 0,8<D/L1<0,90.
- Pour une distance L2 séparant le contour interne et le contour externe du centreur du deuxième siège, la distance L2 est agencée de sorte que 0,75< D/L1 < 0,97, de préférence 0,75<D/L1<0,9, notamment 0,8<D/L1<0,90.

L'invention a également pour objet un amortisseur de torsion pour dispositif de transmission de couple de véhicule à moteur comprenant un agencement de ressorts tel que décrit précédemment, un premier élément s'étendant autour d'un axe de rotation (X) et destiné à être entrainé en rotation par un élément d'entrée de couple, un deuxième élément s'étendant autour de l'axe de rotation (X) et destiné à entraîner en rotation un élément de sortie de couple, l'agencement de ressorts étant agencé entre le premier élément et le deuxième élément de façon à transmettre un couple entre le premier élément et le deuxième élément et amortir les oscillations de couple entre le premier élément et le deuxième élément.
- Selon un mode de réalisation, l'amortisseur comprend une pluralité d'ensembles de ressorts répartis régulièrement autour de l'axe de rotation (X).

L'invention a également pour objet un dispositif de transmission de couple pour véhicule à moteur comprenant :
- un élément d'entrée de couple apte a recevoir le couple généré par le moteur du véhicule;
- un élément de sortie de couple apte à transmettre un couple à un organe de transmission du véhicule;
- un premier élément s'étendant autour d'un axe de rotation (X) et couplé en rotation à l'élément d'entrée de couple,
- un deuxième élément s'étendant autour de l'axe de rotation (X) et couplé en rotation à l'élément de sortie de couple,
- un agencement de ressorts tel que mentionné précédemment, l'agencement de ressorts étant agencé entre le premier élément et le deuxième élément de façon à transmettre un couple entre le premier élément et le deuxième élément et amortir les oscillations de couple entre le premier élément et le deuxième élément.
- Selon un mode de réalisation, le dispositif de transmission de couple est un disque d'embrayage, l'élément d'entrée de couple comprenant un disque de friction, l'élément de sortie de couple comprenant un moyeu central apte à entrainer un arbre d'entrée de boit de vitesse, l'un parmi le premier élément et le deuxième élément comprenant un disque central et l'autre parmi le premier élément et le deuxième élément comprenant deux rondelles latérales agencées de part et d'autre du disque central.
- Selon un mode de réalisation, le dispositif de transmission de couple comprend une pluralité d'ensembles de ressorts répartis autour de l'axe (X) et chaque agencement de ressorts est agencé dans un évidement du disque central et dans deux fenêtres formées respectivement dans chaque rondelle latérale.

L'invention a également pour objet un embrayage pour véhicule à moteur comprenant un dispositif de transmission de couple tel que décrit précédemment et un mécanisme d'embrayage apte à autoriser, interrompre ou limiter la transmission du couple transmis au disque de friction.
- Des exemples préférés de réalisation de l'invention vont maintenant être décrits en référence aux dessins annexés dans lesquels :
   - la figure 1 représente une vue en coupe d'un disque d'embrayage muni d'un agencement de ressorts selon l'invention ;
   - la figure 2 est une en perspective du disque d'embrayage de la figure 1 ;
   - la figure 3 est une vue selon une coupe perpendiculaire à l'axe X du disque d'embrayage de la figure 1;
   - la figure 4 est une vue en coupe montrant l'agencement de ressorts selon un premier mode de réalisation ;
   - la figure 5 est une vue agrandie montrant le centreur du siège de la figure 4 ;
   - la figure 6 est une vue en perspective du siège de la figure 4 ;
   - la figure 7 est une vue en perspective d'une variante du siège de la figure 6 ;
   - la figure 8 est une en perspective du ressort hélicoïdal intermédiaire du premier mode de réalisation.
   - la figure 9 est une vue en coupe montrant l'agencement de ressorts selon un deuxième mode de réalisation ;
   - la figure 10 est une vue agrandie montrant le centreur du siège de la figure 9 ;
   - la figure 11 est une vue en perspective du siège de la figure 9 ;
   - la figure 12 est une en perspective du ressort hélicoïdal intermédiaire du deuxième mode de réalisation.

Dans la description et les revendications, on utilisera, les termes "externe" et "interne" ainsi que les orientations "axiale" et "radiale" pour désigner, selon les définitions données dans la description, des éléments principaux du dispositif de transmission de couple. L'axe X de rotation détermine l'orientation "axiale". Une rotation axiale est donc une rotation autour de l'axe X. L'orientation "radiale" est dirigée orthogonalement à l'axe X. L'orientation circonférentielle est dirigée orthogonalement à l'axe X de rotation et orthogonalement à la direction radiale. Les termes "externe" et "interne" sont utilisés pour définir la position relative d'un composant par rapport à un autre, par référence à l'axe X de rotation, un composant proche dudit axe est ainsi qualifié d'interne par opposition à un composant externe situé radialement en périphérie. Par ailleurs, les angles et secteurs angulaires exprimés sont définis en relation avec une rotation autour de l'axe X.

Cependant, en ce qui concerne les caractéristiques liées à l'agencement de ressorts, et en particulier aux sièges et aux ressorts, l'axe de référence est l'axe Y qui correspond à l'axe du ressort hélicoïdal intermédiaire.

L'agencement de ressorts selon l'invention peut être intégré dans tout amortisseur de torsion disposé sur une chaine de transmission ou un groupe motopropulseur de véhicule et destiné à transmettre le couple du moteur.

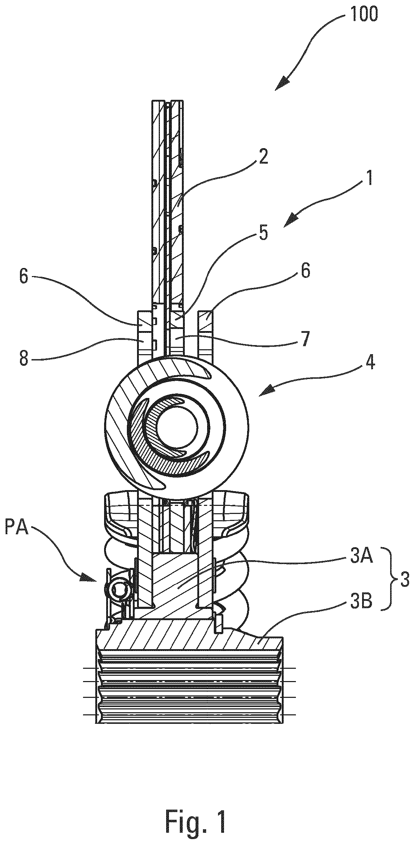

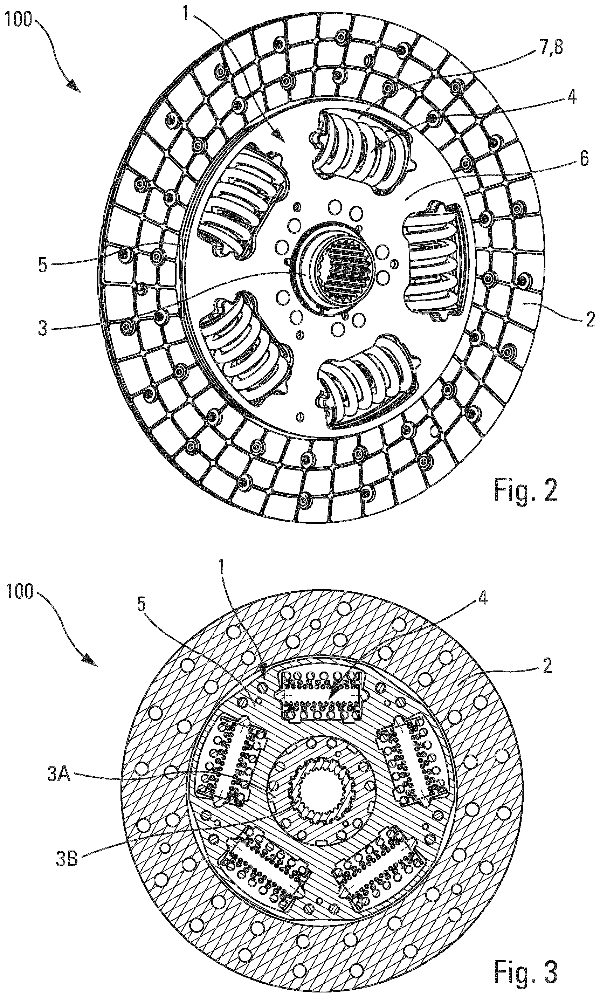

Les figures 1 à 3 illustrent un exemple de réalisation dans lequel l'agencement de ressorts selon l'invention est intégré dans un disque d'embrayage 1 destiné à prendre place entre le moteur d'un véhicule et sa boite de vitesse.

Le disque d'embrayage 100 comporte un disque de friction circulaire 2 muni de garnitures et un moyeu central 3B muni de cannelures internes. Le disque de friction 2 est destiné à être entrainé en rotation par friction entre un plateau de pression d'un mécanisme d'embrayage et un volant d'inertie entrainé par le moteur du véhicule. Le moyeu central 3B est destiné à être couplé en rotation, grâce à ses cannelures internes, à l'arbre d'entrée de la boite de vitesse du véhicule. Un couple est ainsi transmis entre le disque de friction 2 et le moyeu central 3B ou réciproquement.

Le disque d'embrayage 100 est muni d'un amortisseur de torsion 1 autorisant un mouvement de rotation relative autour de l'axe X entre le moyeu central 3B et le disque de friction 2 pour permettre l'amortissement des oscillations de torsion lors de la transmission du couple.

L'amortisseur de torsion 1 comporte, dans le présent exemple, cinq agencement de ressorts 4 disposés circonférentiellement autour du moyeu central 3B.

L'amortisseur de torsion est adapté à comprimer les ressorts des agencements de ressorts 4 entre un premier élément tournant 5 et un deuxième élément tournant 6 pour assurer l'amortissement des acyclismes.

La figure 1 est une vue en coupe du disque d'embrayage. Dans le présent exemple, le deuxième élément tournant 6 est constitué d'une paire de rondelles latérales, ci-après dénommées rondelles de guidage 6 qui sont solidaires en rotation l'une de l'autre. Le premier élément tournant 5 est ici constitué d'un disque central 5, ci-après dénommé voile 5, disposé entre les deux rondelles de guidage 6. Dans le présent exemple, le disque de friction 2 est solidaire en rotation du voile 5, par exemple par l'intermédiaire d'une fixation par rivets. Les deux rondelles de guidage 6 sont fixées toutes deux par rivets sur un moyeu externe 3A, de part et d'autre du voile 5.

Un débattement angulaire est possible entre le moyeu central 3B et le moyeu externe 3A. Un pré-amortisseur PA est ici mis en œuvre pour amortir les vibrations à faible couple, notamment au ralenti. Ce pré-amortisseur comporte un organe d'entrée couplé aux rondelles de guidages 6 et un organe de sortie couplé au moyeu central 3B.

Comme on le voit sur la figure 1, les rondelles de guidage 6 et le voile 5 constituent ainsi un empilement axial de trois disques avec une rotation relative possible entre le voile 5 et les rondelles de guidage 6 et une autre rotation possible entre les rondelles de guidage 6 (couplées au moyeu externe 3A) et le moyeu central 3B.

Pour chaque agencement de ressorts 4, le voile 5 comporte un évidement 7 et les rondelles de guidage 6 comportent chacune une fenêtre 8. L'agencement de ressorts 4 correspondant est monté dans les fenêtres et évidement 8, 7 de sorte que ses extrémités coopèrent chacune avec un bord de l'évidement 7 et un bord de chaque fenêtre 8. Les extrémités de l'agencement de ressorts 4 coopèrent avec les fenêtres 7, 8 grâce à deux sièges 9 et 11. Chacun des sièges 9 et 11 vient donc en appui contre un bord de l'évidement 7 et contre un bord de chacune des fenêtres 8.

Des moyens de pivotement sont prévus pour permettre un pivotement des sièges 9 et 11 par rapport au voile 5 et par rapport aux rondelles de guidage 6. Ce pivotement est permis autour d'un axe s'étendant axialement. Dans le présent exemple, les moyens de pivotement sont constitués d'un pivot 10 que comporte chaque siège 9 et 11, ainsi que d'une première encoche de pivotement pratiquée sur le voile 5, ainsi que d'une paire de deuxièmes encoches de pivotement prévue sur chacune des rondelles de guidage 6. La première encoche de pivotement est prévue sur le bord correspondant de l'évidement 7, et la paire de deuxièmes encoches de pivotement est prévue sur le bord correspondant de chaque fenêtre 8. Le pivot 10 des sièges 9 et 11 est ici constitué d'une surface saillante du siège, en forme de barreau transversal s'étendant sensiblement selon un diamètre du siège. Le pivot 10 vient conjointement en appui sur les trois encoches de pivotement (la première encoche de pivotement au centre et, de part et d'autre de cette dernière, la paire de deuxièmes encoches de pivotement). Le logement créé par les trois encoches de pivotement reçoit ainsi le pivot 10 en lui permettant un pivotement autour d'un axe s'étendant axialement, c'est à dire parallèlement à l'axe X.

Au niveau de chaque agencement de ressort 4, lorsqu'un mouvement de rotation axiale relative a lieu entre le voile 5 et les deux rondelles de guidage 6, l'un des sièges 9 est comprimé uniquement par le voile 5 et s'écarte des bords des fenêtres 8 des rondelles de guidage 6, tandis que l'autre siège 11, sur l'extrémité opposée de l'agencement de ressort 4, vient s'appuyer uniquement sur les rondelles de guidage 6 tandis que le bord de la fenêtre 7 du voile 5 s'éloigne. L'agencement de ressorts 4 est de cette manière comprimé lors des mouvements relatifs entre le voile 5 et les rondelles de guidage 6 pour assurer la fonction d'amortissement de torsion.

La coopération des agencements de ressorts 4 avec le voile 5 et les rondelles de guidage 6 est optimisée et fiabilisée grâce aux sièges 9 et 11 qui permettent un maintien en place de l'agencement de ressort 4 et une interface évitant que les extrémités des ressorts 4 ne se dégradent au contact du voile 5 et des rondelles de guidage 6.

Les sièges 9 et 11 permettent également un guidage optimal des ressorts grâce au pivot 10 assurant une compression des ressorts sans effort parasite. En effet, les extrémités des ressorts restent sensiblement parallèles entre elles au cours de sa compression, grâce au pivot 10.

Les sièges 9 et 11 sont de plus guidés axialement par rapport au voile 5 et aux rondelles de guidage 6 en participant à l'arrêt en translation axiale du voile 5 et des rondelles de guidage 6. Chaque siège 9, 11 comporte à cet effet des agencements de guidage comportant des surfaces qui viennent maintenir les positions relatives, le long de la direction axiale, entre le siège 9,11 et le voile 5 et entre le siège 9, 11 et les rondelles de guidage 6.

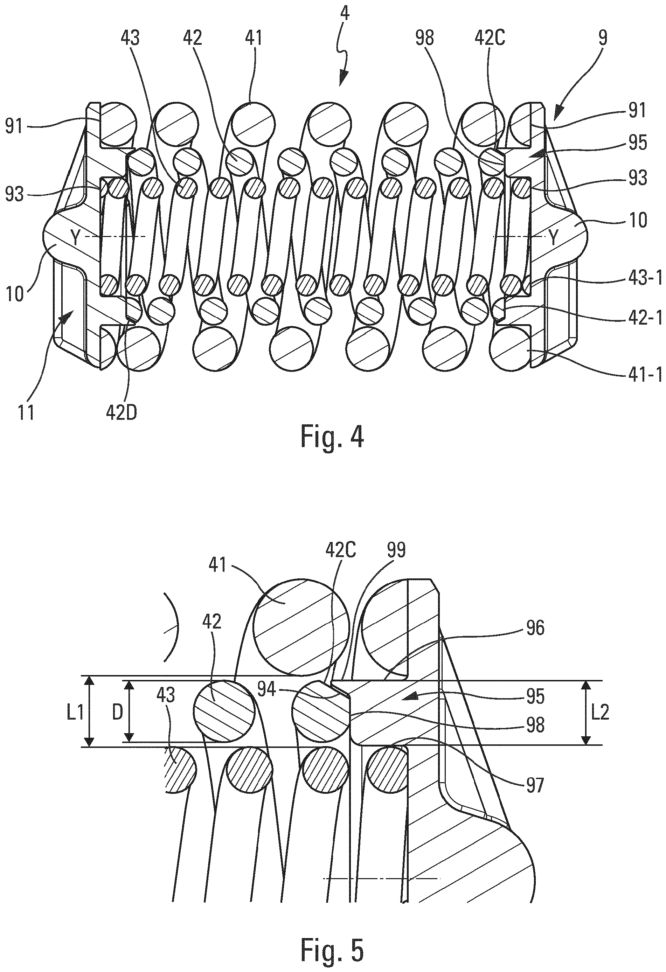

Sur la figure 4 est représenté un premier mode de réalisation d'agencement de ressorts 4. Cet agencement de ressorts 4 comprend :
- un ressort hélicoïdal intérieur 43,
- un ressort hélicoïdal intermédiaire 42, à l'intérieur duquel est logé le ressort hélicoïdal intérieur 43,
- un ressort hélicoïdal extérieur 41, à l'intérieur duquel sont logés le ressort hélicoïdal intermédiaire 42 et le ressort hélicoïdal intérieur 43,
- un premier siège 9 comprenant une surface d'appui interne 93 sur laquelle peut s'appuyer une première extrémité 43-1 du ressort hélicoïdal intérieur 43 et une surface d'appui externe 91 sur laquelle peut s'appuyer une première extrémité 41-1 du ressort hélicoïdal extérieur 41.
- un deuxième siège 11 comprenant une surface d'appui interne 93 sur laquelle peut s'appuyer une deuxième extrémité 43-2 du ressort hélicoïdal intérieur 43 et une surface d'appui externe 91 sur laquelle peut s'appuyer une deuxième extrémité 41-2 du ressort hélicoïdal extérieur 41.

Comme on peut le voir sur la figure 4, le ressort hélicoïdal intermédiaire s'étend le long d'un axe Y autour duquel ses spires sont enroulées. Le ressort hélicoïdal intérieur 43, le ressort hélicoïdal intermédiaire 42 et le ressort hélicoïdal extérieur 41 sont sensiblement coaxiaux.

Chaque siège 9 comportant en outre un centreur 95 faisant saillie par rapport à sa surface d'appui interne 93 et par rapport à sa surface d'appui externe 91.

Le centreur 95 du premier siège 9 présente d'une part un contour externe 96 à l'extérieur duquel est agencé la première extrémité 41-1 du ressort hélicoïdal extérieur 41 et d'autre part un contour interne 97 à l'intérieur duquel est agencé la première extrémité 43-1 du ressort hélicoïdal intérieur 43.

Le centreur 95 du premier siège 9 présente en outre une face d'appui intermédiaire 98 sur laquelle peut s'appuyer une première extrémité 42-1 du ressort hélicoïdal intermédiaire 42.

La première extrémité 42-1 du ressort hélicoïdal intermédiaire 42 comporte un chanfrein 42C et le centreur 95 du premier siège 9 comporte un rebord 99 de centrage agencé pour coopérer avec le chanfrein 42C du ressort hélicoïdal intermédiaire 42 pour centrer le ressort hélicoïdal intermédiaire 42.

De façon à faire baisser la raideur de l'agencement de ressorts dans un encombrement donné, pour une distance L1 séparant le ressort hélicoïdal extérieur 41 du ressort hélicoïdal intérieur 43, et pour un diamètre de spire D du ressort hélicoïdal intermédiaire 42, le diamètre de spire D et le centreur 95 sont agencés de sorte que 0,75< D/L1 < 0,97. De façon avantageuse, ce ratio D/L1 peut être mesuré dans tout plan comprenant l'axe Y du ressort hélicoïdal intermédiaire et passant par le centreur.

De façon avantageuse, le diamètre de spire D et le centreur 95 sont agencés de sorte que 0,75<D/L1<0,9. Ainsi, ce ratio représente un bon compromis pour, premièrement : éviter les phénomènes de frottement entre d'une part le ressort intermédiaire 42 et le ressort externe 41, et d'autre part entre le ressort intermédiaire 42 et le ressort interne 43, et deuxièmement faire baisser la raideur de l'agencement de ressort 4 dans un encombrement donné. De façon préférée, le diamètre de spire D et le centreur 95 sont agencés de sorte que 0,8<D/L1<0,90, par exemple D/L1=0,85.

De même, pour une distance L2 séparant le contour interne 97 et le contour externe 96 du centreur 95, la distance L2 est telle que 0,8<D/L2<1, et notamment 0,9<D/L2<1.

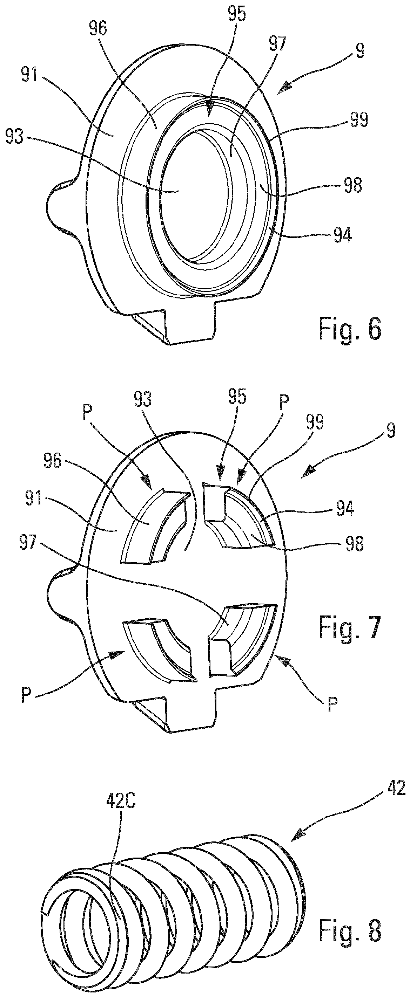

Les figures 6 et 7 présentent deux variantes de réalisation du centreur 95. Dans ces deux variantes, le rebord 99 fait saillie par rapport à la face d'appui intermédiaire 98 du ressort hélicoïdal intermédiaire 42.

Dans la première variante de la figure 6, le centreur 95 s'étend circonférentiellement tout autour de l'axe Y du ressort hélicoïdal intermédiaire 42. Le centreur 95 a donc une forme de tube faisant saillie par rapport à une face frontale du siège comprenant la surface d'appui interne 93 et la surface d'appui externe 91. Le rebord 99, en particulier sa paroi inclinée 94, sont agencés à l'extrémité du tube opposée aux surfaces d'appui interne 93 et externe 91.

Dans la deuxième variante de la figure 7, le centreur 95 comprend quatre plots P espacés les uns des autres, chaque plot P ayant un bord interne tourné vers l'axe Y du ressort hélicoïdal intermédiaire 42 et formant le contour interne 97 du centreur 95, et chaque plot P ayant un bord externe tourné du côté opposé à l'axe Y du ressort hélicoïdal intermédiaire 42 et formant le contour externe 96 du centreur 95.

Dans cette variante, le contour interne 97 et le contour externe 96 du centreur 95 sont donc discontinus.

Dans une autre variante non représentée, certains plots peuvent former une partie du contour interne sans former une partie du contour externe et d'autres plots peuvent former une partie du contour externe sans former une partie du contour interne.

Dans ces deux variantes, le rebord de centrage 99 comporte une paroi inclinée 94 plaquée contre le chanfrein 42C du ressort hélicoïdal intermédiaire 42. La paroi inclinée 94 du centreur 95 relie la face d'appui intermédiaire 98 du centreur 95 au contour externe 96 du centreur 95. En effet dans ces deux variantes, la paroi inclinée 94 du centreur coopère avec un chanfrein 42C ménagé sur un bord radialement externe de la première extrémité 42-1 du ressort hélicoïdal intermédiaire 42. Le ressort intermédiaire 42 et son chanfrein 42C sont visibles sur la figure 8.

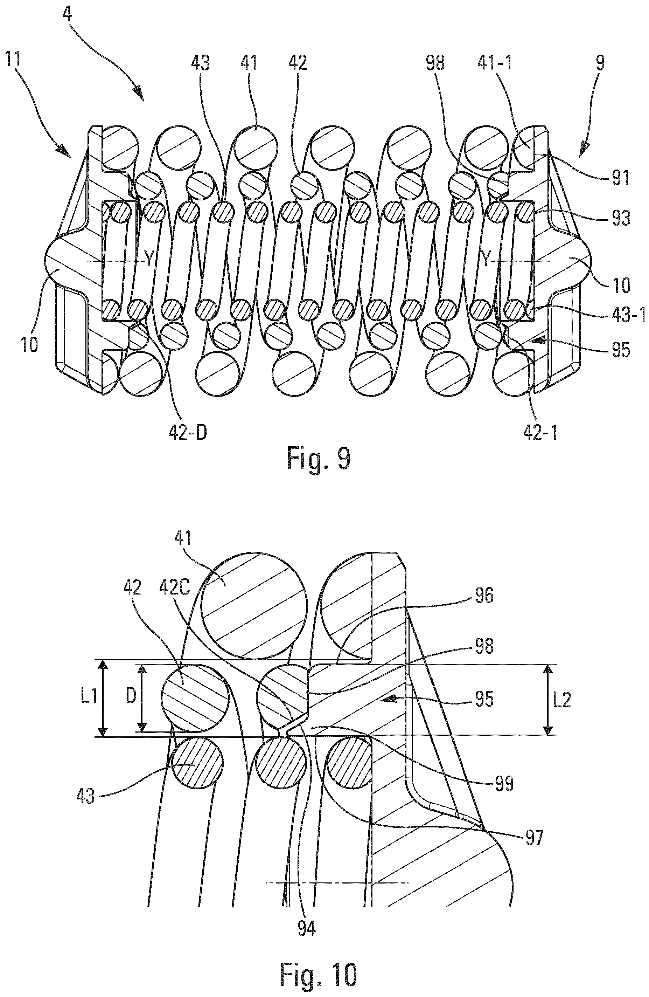

Les figures 9 à 12 illustrent un deuxième mode de réalisation dans lequel la position du rebord de centrage 99 du siège 9 diffère de celle du premier mode de réalisation.

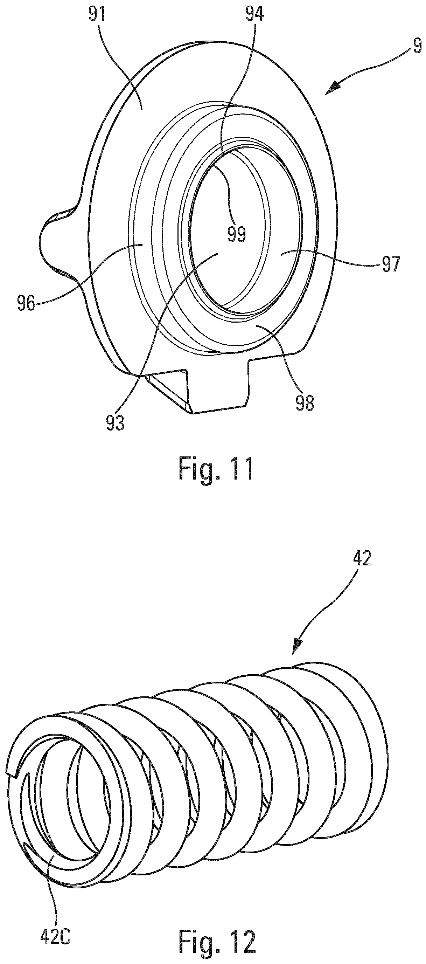

Dans ce mode de réalisation, le rebord de centrage 99 comporte aussi une paroi inclinée 94 plaquée contre le chanfrein 42C du ressort hélicoïdal intermédiaire 42. La paroi inclinée 94 du centreur 95 relie la face d'appui intermédiaire 98 du centreur 95 au contour interne 97 du centreur 95. En effet, la paroi inclinée 94 du centreur 95 coopère avec un chanfrein 42C ménagé sur un bord radialement interne de la première extrémité 42-1 du ressort hélicoïdal intermédiaire 42. Le ressort intermédiaire Le ressort intermédiaire 42 et son chanfrein 42C sont visibles sur la figure 12. Dans ce mode de réalisation le centreur s'étend tout autour de l'axe Y de façon continue.

Avec ce mode de réalisation, on a aussi 0,75< D/L1 < 0,97, de préférence 0,75<D/L1<0,9, notamment 0,8<D/L1<0,90.

Selon une variante non représentée, le centreur de ce mode de réalisation peut être formé par une pluralité de plots espacés les uns des autres, à l'instar de la variante du mode de réalisation précédent.

Dans ces deux modes de réalisation, on remarque notamment sur les figures 5 et 10 que la forme des rebords 99 permet de maintenir des ratios D/L1 et D/L2 à l'intérieur des plages de valeurs mentionnées ci-dessus. Dans un plan comprenant l'axe Y et passant par le rebord 99, le rebord 99 présente dans les deux modes de réalisation une section de forme générale triangulaire dont l'un des côtés forme la paroi inclinée 94.

Dans le premier mode de réalisation de la figure 5, un autre des côtés de la section de forme générale triangulaire forme une partie du contour externe 96 du centreur 95.

Dans le deuxième mode de réalisation de la figure 10, un autre des côtés de la section de forme générale triangulaire forme une partie du contour interne 97 du centreur 95.

Comme indiqué précédemment, l'agencement de ressorts comporte ici deux sièges 9 et 11 agencés à chaque extrémité des ressorts 41, 42 et 43. Ici les deux sièges 9 et 11 sont identiques.

Ainsi, le centreur 95 du deuxième siège 11 présente d'une part un contour externe 96 à l'extérieur duquel est agencé la deuxième extrémité 41-2 du ressort hélicoïdal extérieur 41 et d'autre part un contour interne 97 à l'intérieur duquel est agencé la deuxième extrémité 43-2 du ressort hélicoïdal intérieur 43. Le centreur 95 du deuxième siège 11 présente aussi une face d'appui intermédiaire 98 sur laquelle peut s'appuyer une deuxième extrémité 42-2 du ressort hélicoïdal intermédiaire 42. La deuxième extrémité 42-2 du ressort hélicoïdal intermédiaire 42 comporte un chanfrein 42D et le centreur 95 du deuxième siège 11 comporte également un rebord 99 de centrage coopérant avec le chanfrein 42D du ressort hélicoïdal intermédiaire 42 pour centrer le ressort hélicoïdal intermédiaire 42.

De même, pour une distance L1 séparant le ressort hélicoïdal extérieur 41 du ressort hélicoïdal intérieur 43 et pour un diamètre de spire D du ressort hélicoïdal intermédiaire 42, le diamètre de spire D et le centreur 95 du deuxième siège 11 sont agencés de sorte que 0,75< D/L1 < 0,97. 0,7 < D/L1 < 0,97, de préférence 0,75<D/L1<0,9, notamment 0,8<D/L1<0,90.

Les rebords 99 de centrage sont agencés pour coopérer avec le chanfrein 42C du ressort hélicoïdal intermédiaire mais comme on peut le voir sur la figure 10, le ressort hélicoïdal intermédiaire peut être monté autour de la paroi inclinée avec un jeu de montage de sorte que le ressort hélicoïdal intermédiaire n'est pas précontraint radialement par le centreur.

De même, dans le cas du premier mode de réalisation, le ressort hélicoïdal intermédiaire peut être monté à l'intérieur de la paroi inclinée avec un jeu de montage.

Selon un autre mode de réalisation non représenté, le disque de friction est fixé sur l'une des rondelles de guidage et le voile est couplé, via un pré-amortisseur ou pas, au moyeu central.

D'autres dispositifs de transmission de couple peuvent être mis en œuvre. Par exemple, l'agencement de ressorts peut être prévu dans tout type de dispositifs de transmission de couple tels que, par exemple, d'autres types de disques d'embrayage, des limiteurs de couple, des double volants amortisseur, ou tout autre dispositif comportant un amortisseur de torsion.

## Revendications

1. Agencement de ressorts (4) pour un dispositif de transmission de couple de véhicule à moteur comprenant :
- un ressort hélicoïdal intérieur (43),
- un ressort hélicoïdal intermédiaire (42), à l'intérieur duquel est logé le ressort hélicoïdal intérieur (43),
- un ressort hélicoïdal extérieur (41), à l'intérieur duquel sont logés le ressort hélicoïdal intermédiaire (42) et le ressort hélicoïdal intérieur (43),
- un premier siège (9) comprenant une surface d'appui interne (93) sur laquelle peut s'appuyer une première extrémité (43-1) du ressort hélicoïdal intérieur (43) et une surface d'appui externe (91) sur laquelle peut s'appuyer une première extrémité (41-1) du ressort hélicoïdal extérieur (41), le premier siège (9) comportant en outre un centreur (95) faisant saillie par rapport à la surface d'appui interne (93) et par rapport à la surface d'appui externe (91) ; le centreur (95) du premier siège (9) présentant d'une part un contour externe (96) à l'extérieur duquel est agencé la première extrémité (41-1) du ressort hélicoïdal extérieur (41) et d'autre part un contour interne (97) à l'intérieur duquel est agencé la première extrémité (43-1) du ressort hélicoïdal intérieur (43), le centreur (95) du premier siège (9) présentant en outre une face d'appui intermédiaire (98) sur laquelle peut s'appuyer une première extrémité (42-1) du ressort hélicoïdal intermédiaire (42),
la première extrémité (42-1) du ressort hélicoïdal intermédiaire (42) comportant un chanfrein (42C) et le centreur (95) du premier siège (9) comportant un rebord (99) de centrage agencé pour coopérer avec le chanfrein (42C) du ressort hélicoïdal intermédiaire (42) pour centrer le ressort hélicoïdal intermédiaire (42),
ledit agencement de ressorts étant **caractérisé en ce que** pour une distance L1 séparant le ressort hélicoïdal extérieur (41) du ressort hélicoïdal intérieur (43), et pour un diamètre de spire D du ressort hélicoïdal intermédiaire (42), le diamètre de spire (D) et le centreur (95) sont agencés de sorte que 0,75< D/L1 < 0,97,
et **en ce que**, pour une distance (L2) séparant le contour interne (97) et le contour externe (96) du centreur (95) du premier siège (9), la distance (L2) est telle que 0,8<D/L2<1.

2. Agencement de ressorts (4) selon la revendication précédente dans lequel le diamètre de spire (D) et le centreur (95) sont agencés de sorte que 0,75<D/L1<0,9.

3. Agencement de ressorts (4) selon l'une des revendications précédentes dans lequel le diamètre de spire (D) et le centreur (95) sont agencés de sorte que 0,8<D/L1<0,90, par exemple D/L1=0,85.

4. Agencement de ressorts (4) selon l'une des revendications précédentes dans lequel le ressort hélicoïdal intermédiaire (42) s'étend le long d'un axe (Y) et le centreur (95) s'étend circonférentiellement tout autour de l'axe (Y).

5. Agencement de ressorts (4) selon l'une des revendications 1 à 4 dans lequel le centreur (95) comprend une pluralité de plots (P) espacés les uns des autres, une partie au moins des plots (P) ayant un bord interne tourné vers l'axe (Y) du ressort hélicoïdal intermédiaire et formant le contour interne (97) du centreur (95), et une partie au moins des plots (P) ayant un bord externe tourné du côté opposé à l'axe (Y) du ressort hélicoïdal intermédiaire et formant le contour externe (96) du centreur (95).

6. Agencement de ressorts selon l'une des revendications 1 à 5 dans lequel le rebord de centrage (99) comporte une paroi inclinée (94) plaquée contre le chanfrein (42C) du ressort hélicoïdal intermédiaire (42), la paroi inclinée (94) du rebord (99) étant agencée sur une extrémité du centreur (95) axialement opposée aux surfaces d'appui interne et externe du premier siège

7. Agencement de ressorts selon l'une des revendications 1 à 6 dans lequel la paroi inclinée (94) du centreur (95) relie la face d'appui intermédiaire (98) du centreur (95) au contour externe (96) du centreur (95).

8. Agencement de ressorts selon l'une des revendications 1 à 6 dans lequel la paroi inclinée (94) du centreur (95) relie la face d'appui intermédiaire (98) du centreur (95) au contour interne (97) du centreur (95).

9. Agencement de ressorts selon l'une des revendications 1 à 8 dans lequel, dans un plan comprenant l'axe Y et passant par le rebord, le rebord (99) présente une section de forme générale triangulaire, l'un des côtés de la section de forme générale triangulaire formant la paroi inclinée (94) et un autre des côtés de la section de forme générale triangulaire formant une partie du contour externe (96) ou interne (97) du centreur (95).

10. Agencement de ressorts selon l'une des revendications 1 à 9 comprenant un deuxième siège (11) comprenant une surface d'appui interne (93) sur laquelle peut s'appuyer une deuxième extrémité (43-2) du ressort hélicoïdal intérieur (43) et une surface d'appui externe (91) sur laquelle peut s'appuyer une deuxième extrémité (41-2) du ressort hélicoïdal extérieur (41), le deuxième siège (11) comportant en outre un centreur (95) faisant saillie par rapport à la surface d'appui interne (93) et par rapport à la surface d'appui externe (91) du deuxième siège (11), le centreur (95) du deuxième siège (11) présentant d'une part un contour externe (96) à l'extérieur duquel est agencé la deuxième extrémité (41-2) du ressort hélicoïdal extérieur (41) et d'autre part un contour interne (97) à l'intérieur duquel est agencé la deuxième extrémité (43-2) du ressort hélicoïdal intérieur (43), le centreur (95) du deuxième siège (11) présentant en outre une face d'appui intermédiaire (98) sur laquelle peut s'appuyer une deuxième extrémité (42-2) du ressort hélicoïdal intermédiaire (42).

11. Dispositif de transmission de couple (100) pour véhicule à moteur comprenant :
- un élément d'entrée de couple (2) apte a recevoir le couple généré par le moteur du véhicule;
- un élément de sortie de couple (3) apte à transmettre un couple à un organe de transmission du véhicule;
- un premier élément (5) s'étendant autour d'un axe de rotation (X) et couplé en rotation à l'élément d'entrée de couple (2),
- un deuxième élément (6) s'étendant autour de l'axe de rotation (X) et couplé en rotation à l'élément de sortie de couple (3),
- un agencement de ressorts (4) selon l'une des revendications précédentes, l'agencement de ressorts (4) étant agencé entre le premier élément (5) et le deuxième élément (6) de façon à transmettre un couple entre le premier élément (5) et le deuxième élément (6) et amortir les oscillations de couple entre le premier élément (5) et le deuxième élément (6).

12. Dispositif de transmission de couple (100) pour véhicule à moteur selon la revendication précédente dans lequel le dispositif de transmission de couple (100) est un disque d'embrayage (100), l'élément d'entrée de couple comprenant un disque de friction (2), l'élément de sortie de couple (3) comprenant un moyeu central (3B) apte à entrainer un arbre d'entrée de boit de vitesse, l'un parmi le premier élément (5) et le deuxième élément (6) comprenant un disque central (5) et l'autre parmi le premier élément (5) et le deuxième élément (6) comprenant deux rondelles latérales (6) agencées de part et d'autre du disque central (5).

13. Embrayage pour véhicule à moteur comprenant un dispositif de transmission de couple (100) selon l'une des revendications 11 à 12 et un mécanisme d'embrayage apte à autoriser, interrompre ou limiter la transmission du couple transmis au disque de friction (2).

## Patentansprüche

1. Federnanordnung (4) für eine Drehmomentübertragungsvorrichtung eines Kraftfahrzeugs, beinhaltend:
- eine innere Schraubenfeder (43),
- eine mittlere Schraubenfeder (42), innerhalb derer die innere Schraubenfeder (43) aufgenommen ist,
- eine äußere Schraubenfeder (41), innerhalb derer die mittlere Schraubenfeder (42) und die innere Schraubenfeder (43) aufgenommen sind,
- einen ersten Sitz (9), der eine innere Anlagefläche (93), an der ein erstes Ende (43-1) der inneren Schraubenfeder (43) anliegen kann, und eine äußere Anlagefläche (91), an der ein erstes Ende (41-1) der äußeren Schraubenfeder (41) anliegen kann, beinhaltet, wobei der erste Sitz (9) ferner ein Zentrierelement (95) umfasst, das mit Bezug auf die innere Anlagefläche (93) und mit Bezug auf die äußere Anlagefläche (91) vorsteht; wobei das Zentrierelement (95) des ersten Sitzes (9) einerseits eine Außenkontur (96), auf dessen Außenseite das erste Ende (41-1) der äußeren Schraubenfeder (41) eingerichtet ist, und andererseits eine Innenkontur (97), auf dessen Innenseite das erste Ende (43-1) der inneren Schraubenfeder (43) eingerichtet ist, aufweist, wobei das Zentrierelement (95) des ersten Sitzes (9) ferner eine mittlere Anlagefläche (98) aufweist, an der ein erstes Ende (42-1) der mittleren Schraubenfeder (42) anliegen kann,
wobei das erste Ende (42-1) der mittleren Schraubenfeder (42) eine Abschrägung (42C) umfasst und das Zentrierelement (95) des ersten Sitzes (9) einen Zentrierrand (99) umfasst, der dazu eingerichtet ist, mit der Abschrägung (42C) der mittleren Schraubenfeder (42) zusammenzuwirken, um die mittlere Schraubenfeder (42) zu zentrieren,
wobei die Federnanordnung **dadurch gekennzeichnet ist, dass** für einen Abstand L1, der die äußere Schraubenfeder (41) von der inneren Schraubenfeder (43) trennt, und für einen Windungsdurchmesser D der mittleren Schraubenfeder (42) der Windungsdurchmesser (D) und das Zentrierelement (95) so eingerichtet sind, dass 0,75<D/L1<0,97,
und dass für einen Abstand (L2), der die Innenkontur (97) und die Außenkontur (96) des Zentrierelements (95) des ersten Sitzes (9) trennt, der Abstand (L2) derart ist, dass 0,8<D/L2<1.

2. Federnanordnung (4) nach dem vorhergehenden Anspruch, wobei der Windungsdurchmesser (D) und das Zentrierelement (95) so eingerichtet sind, dass 0,75<D/L1<0,9.

3. Federnanordnung (4) nach einem der vorhergehenden Ansprüche, wobei der Windungsdurchmesser (D) und das Zentrierelement (95) so eingerichtet sind, dass 0,8<D/L1<0,90, beispielsweise D/L1=0,85.

4. Federnanordnung (4) nach einem der vorhergehenden Ansprüche, wobei sich die mittlere Schraubenfeder (42) entlang einer Achse (Y) erstreckt und sich das Zentrierelement (95) in Umfangsrichtung rund um die Achse (Y) erstreckt.

5. Federnanordnung (4) nach einem der Ansprüche 1 bis 4, wobei das Zentrierelement (95) eine Vielzahl von Blöcken (P) beinhaltet, die voneinander beabstandet sind, wobei mindestens ein Teil der Blöcke (P) einen Innenkante aufweist, die zu der Achse (Y) der mittleren Schraubenfeder gewandt ist und die Innenkontur (97) des Zentrierelements (95) bildet, und mindestens ein Teil der Blöcke (P) eine Außenkante aufweist, die zu der zu der Achse (Y) der mittleren Schraubenfeder entgegengesetzten Seite gewandt ist und die Außenkontur (96) des Zentrierelements (95) bildet.

6. Federnanordnung nach einem der Ansprüche 1 bis 5, wobei der Zentrierrand (99) eine geneigte Wand (94) umfasst, die gegen die Abschrägung (42C) der mittleren Schraubenfeder (42) drückt, wobei die geneigte Wand (94) des Rands (99) an einem Ende des Zentrierelements (95) eingerichtet ist, das zu der inneren und äußeren Anlagefläche des ersten Sitzes axial entgegengesetzt ist.

7. Federnanordnung nach einem der Ansprüche 1 bis 6, wobei die geneigte Wand (94) des Zentrierelements (95) die mittlere Anlagefläche (98) des Zentrierelements (95) mit der Außenkontur (96) des Zentrierelements (95) verbindet.

8. Federnanordnung nach einem der Ansprüche 1 bis 6, wobei die geneigte Wand (94) des Zentrierelements (95) die mittlere Anlagefläche (98) des Zentrierelements (95) mit der Innenkontur (97) des Zentrierelements (95) verbindet.

9. Federnanordnung nach einem der Ansprüche 1 bis 8, wobei der Rand (99) in einer Ebene, die die Y-Achse beinhaltet und durch den Rand verläuft, einen im Wesentlichen dreieckförmigen Querschnitt aufweist, wobei eine der Seiten des im Wesentlichen dreieckförmigen Querschnitts die geneigte Wand (94) bildet und eine andere der Seiten des im Wesentlichen dreieckförmigen Querschnitts einen Teil der Außenkontur (96) oder Innenkontur (97) des Zentrierelements (95) bildet.

10. Federnanordnung nach einem der Ansprüche 1 bis 9, beinhaltend einen zweiten Sitz (11), der eine innere Anlagefläche (93), an der ein zweites Ende (43-2) der inneren Schraubenfeder (43) anliegen kann, und eine äußere Anlagefläche (91), an der ein zweites Ende (41-2) der äußeren Schraubenfeder (41) anliegen kann, beinhaltet, wobei der zweite Sitz (11) ferner ein Zentrierelement (95) umfasst, das mit Bezug auf die innere Anlagefläche (93) und mit Bezug auf die äußere Anlagefläche (91) des zweiten Sitzes (11) vorsteht, wobei das Zentrierelement (95) des zweiten Sitzes (11) einerseits eine Außenkontur (96), auf dessen Außenseite das zweite Ende (41-2) der äußeren Schraubenfeder (41) eingerichtet ist, und andererseits eine Innenkontur (97), auf dessen Innenseite das zweite Ende (43-2) der inneren Schraubenfeder (43) eingerichtet ist, aufweist, wobei das Zentrierelement (95) des zweiten Sitzes (11) ferner eine mittlere Anlagefläche (98) aufweist, an der ein zweites Ende (42-2) der mittleren Schraubenfeder (42) anliegen kann.

11. Drehmomentübertragungsvorrichtung (100) für ein Kraftfahrzeug, beinhaltend:
- ein Drehmomenteingangselement (2), das dazu fähig ist, das durch den Motor des Fahrzeugs erzeugte Drehmoment aufzunehmen;
- ein Drehmomentausgangselement (3), das dazu fähig ist, ein Drehmoment an ein Übertragungsorgan des Fahrzeugs zu übertragen;
- ein erstes Element (5), das sich um eine Drehachse (X) erstreckt und mit dem Drehmomenteingangselement (2) drehgekoppelt ist,
- ein zweites Element (6), das sich um die Drehachse (X) erstreckt und mit dem Drehmomentausgangselement (3) drehgekoppelt ist,
- eine Federnanordnung (4) nach einem der vorhergehenden Ansprüche, wobei die Federnanordnung (4) zwischen dem ersten Element (5) und dem zweiten Element (6) eingerichtet ist, um ein Drehmoment zwischen dem ersten Element (5) und dem zweiten Element (6) zu übertragen und die Drehmomentschwingungen zwischen dem ersten Element (5) und dem zweiten Element (6) zu dämpfen.

12. Drehmomentübertragungsvorrichtung (100) für ein Kraftfahrzeug nach dem vorhergehenden Anspruch, wobei die Drehmomentübertragungsvorrichtung (100) eine Kupplungsscheibe (100) ist, wobei das Drehmomenteingangselement eine Reibscheibe (2) beinhaltet, wobei das Drehmomentausgangselement (3) eine zentrale Nabe (3B) beinhaltet, die dazu fähig ist, eine Getriebeeingangswelle anzutreiben, wobei eines von dem ersten Element (5) und dem zweiten Element (6) eine zentrale Scheibe (5) beinhaltet und das andere von dem ersten Element (5) und dem zweiten Element (6) zwei Seitenscheiben (6) beinhaltet, die zu beiden Seiten der zentralen Scheibe (5) eingerichtet sind.

13. Kupplung für ein Kraftfahrzeug, beinhaltend eine Drehmomentübertragungsvorrichtung (100) nach einem der Ansprüche 11 bis 12 und einen Kupplungsmechanismus, der dazu fähig ist, die Übertragung des an die Reibscheibe (2) übertragenen Drehmoments zu gestatten, zu unterbrechen oder zu begrenzen.

## Claims

1. Arrangement of springs (4) for a motor vehicle torque transmission device, comprising:
- an inner helical spring (43),
- an intermediate helical spring (42), inside which the inner helical spring (43) is housed,
- an outer helical spring (41), inside which the intermediate helical spring (42) and the inner helical spring (43) are housed,
- a first seat (9) comprising an internal bearing surface (93) on which a first end (43-1) of the inner helical spring (43) can bear and an external bearing surface (91) on which a first end (41-1) of the outer helical spring (41) can bear, the first seat (9) also having a centring device (95) projecting with respect to the internal bearing surface (93) and with respect to the external bearing surface (91); the centring device (95) of the first seat (9) having on the one hand an external contour (96) on the outside of which the first end (41-1) of the outer helical spring (41) is arranged and on the other hand an internal contour (97) on the inside of which the first end (43-1) of the inner helical spring (43) is arranged, the centring device (95) of the first seat (9) also having an intermediate bearing face (98) on which a first end (42-1) of the intermediate helical spring (42) can bear,
the first end (42-1) of the intermediate helical spring (42) having a chamfer (42C) and the centring device (95) of the first seat (9) having a centring lip (99) arranged to cooperate with the chamfer (42C) of the intermediate helical spring (42) so as to centre the intermediate helical spring (42),
said arrangement of springs being **characterized in that**, for a distance L1 separating the outer helical spring (41) from the inner helical spring (43), and for a turn diameter D of the intermediate helical spring (42), the turn diameter (D) and the centring device (95) are arranged such that 0.75<D/L1<0.97,
and **in that**, for a distance (L2) separating the internal contour (97) and the external contour (96) of the centring device (95) of the first seat (9), the distance (L2) is such that 0.8<D/L2<1.

2. Arrangement of springs (4) according to the preceding claim, wherein the turn diameter (D) and the centring device (95) are arranged such that 0.75<D/L1<0.9.

3. Arrangement of springs (4) according to either of the preceding claims, wherein the turn diameter (D) and the centring device (95) are arranged such that 0.8<D/L1<0.90, for example D/L1=0.85.

4. Arrangement of springs (4) according to one of the preceding claims, wherein the intermediate helical spring (42) extends along an axis (Y) and the centring device (95) extends circumferentially all around the axis (Y).

5. Arrangement of springs (4) according to one of Claims 1 to 4, wherein the centring device (95) comprises a plurality of lugs (P) spaced apart from one another, at least some of the lugs (P) having an internal edge turned towards the axis (Y) of the intermediate helical spring and forming the internal contour (97) of the centring device (95), and at least some of the lugs (P) having an external edge turned away from the axis (Y) of the intermediate helical spring and forming the external contour (96) of the centring device (95).

6. Arrangement of springs according to one of Claims 1 to 5, wherein the centring lip (99) has an inclined wall (94) pressed against the chamfer (42C) of the intermediate helical spring (42), the inclined wall (94) of the lip (99) being arranged on an end of the centring device (95) that is axially opposite the internal and external bearing surfaces of the first seat.

7. Arrangement of springs according to one of Claims 1 to 6, wherein the inclined wall (94) of the centring device (95) connects the intermediate bearing face (98) of the centring device (95) to the external contour (96) of the centring device (95).

8. Arrangement of springs according to one of Claims 1 to 6, wherein the inclined wall (94) of the centring device (95) connects the intermediate bearing face (98) of the centring device (95) to the internal contour (97) of the centring device (95).

9. Arrangement of springs according to one of Claims 1 to 8, wherein, in a plane comprising the axis Y and passing through the lip, the lip (99) has a section of triangular overall shape, one of the sides of the section of triangular overall shape forming the inclined wall (94) and another of the sides of the section of triangular overall shape forming a part of the external (96) or internal (97) contour of the centring device (95).

10. Arrangement of springs according to one of Claims 1 to 9, comprising a second seat (11) comprising an internal bearing surface (93) on which a second end (43-2) of the inner helical spring (43) can bear and an external bearing surface (91) on which a second end (41-2) of the outer helical spring (41) can bear, the second seat (11) also having a centring device (95) projecting with respect to the internal bearing surface (93) and with respect to the external bearing surface (91) of the second seat (11), the centring device (95) of the second seat (11) having on the one hand an external contour (96) on the outside of which the second end (41-2) of the outer helical spring (41) is arranged and on the other hand an internal contour (97) on the inside of which the second end (43-2) of the inner helical spring (43) is arranged, the centring device (95) of the second seat (11) also having an intermediate bearing face (98) on which a second end (42-2) of the intermediate helical spring (42) can bear.

11. Torque transmission device (100) for a motor vehicle, comprising:
- a torque input element (2) able to receive the torque generated by the engine of the vehicle;
- a torque output element (3) able to transmit torque to a transmission member of the vehicle;
- a first element (5) extending around an axis of rotation (X) and rotationally coupled to the torque input element (2),
- a second element (6) extending around the axis of rotation (X) and rotationally coupled to the torque output element (3),
- an arrangement of springs (4) according to one of the preceding claims, the arrangement of springs (4) being arranged between the first element (5) and the second element (6) so as to transmit torque between the first element (5) and the second element (6) and damp the torque oscillations between the first element (5) and the second element (6).

12. Torque transmission device (100) for a motor vehicle according to the preceding claim, wherein the torque transmission device (100) is a clutch disc (100), the torque input element comprising a friction disc (2), the torque output element (3) comprising a central hub (3B) able to drive a gearbox input shaft, one out of the first element (5) and the second element (6) comprising a central disc (5) and the other out of the first element (5) and the second element (6) comprising two lateral washers (6) arranged on either side of the central disc (5).

13. Clutch for a motor vehicle, comprising a torque transmission device (100) according to either of Claims 11 and 12 and a clutch mechanism that is able to authorize, interrupt or limit the transmission of the torque transmitted to the friction disc (2).
